# EUROPÄISCHE PATENTSCHRIFT

(11) **EP 1 706 365 B1**
(45) Veröffentlichungstag und Bekanntmachung des Hinweises auf die Patenterteilung: **19.12.2007**
(21) Anmeldenummer: 05701470.6
(22) Anmeldetag: 10.01.2005
(51) Int. Cl.: C04B 35/115, C04B 35/10

(54) **FARBIGES TRANSPARENTES KORUNDMATERIAL MIT POLYKRISTALLINEM SUB-µM GEFÜGE UND VERFAHREN ZUR HERSTELLUNG VON FORMKÖRPERN AUS DIESEM MATERIAL**
COLORED TRANSPARENT CORUNDUM MATERIAL COMPRISING A POLYCRYSTALLINE SUB-µM STRUCTURE, AND METHOD FOR THE PRODUCTION OF MOLDED ELEMENTS FROM SAID MATERIAL
MATERIAU DE CORINDON TRANSPARENT COLORE PRESENTANT UNE STRUCTURE POLYCRISTALLINE SOUS-MICROMETRIQUE ET PROCEDE DE FABRICATION DE CORPS MOULES A PARTIR DE CE MATERIAU

(30) Priorität: 19.01.2004 DE 102004003505
(43) Veröffentlichungstag der Anmeldung: 04.10.2006
(73) Patentinhaber: Fraunhofer-Gesellschaft zur Förderung der angewandten Forschung e.V., 80686 München (DE)
(72) Erfinder: KRELL, Andreas, 01217 Dresden (DE); BLANK, Paul, 01187 Dresden (DE); KLIMKE, Jens, 01309 Dresden (DE); HUTZLER, Thomas, 01187 Dresden (DE)
(74) Vertreter: Rauschenbach, Marion
(86) Internationale Anmeldenummer: PCT/EP2005/050076
(87) Internationale Veröffentlichungsnummer: WO 2005/068392

(56) Entgegenhaltungen:
- EP-A- 1 053 983
- WO-A-20/04007398
- DE-A1- 4 124 630
- GB-A- 1 027 939
- US-A1- 2002 135 108

## Beschreibung

Die vorliegende Erfindung bezieht sich auf das Gebiet der Keramik und betrifft ein farbiges transparentes Korundmaterial mit polykristallinem sub-µm Gefüge, welches sich aufgrund seiner optischen Eigenschaften zur Imitation von farbigen Korundedelsteinen (Rubinen und Saphiren) eignet und diesen aufgrund der isotropen polykristallinen Mikrostruktur in den mechanischen Eigenschaften überlegen ist. Neben der Anwendung in der Schmuckindustrie bestehen Verwendungsmöglichkeiten dieses Materials in der Funktionskeramik z.B. als Szintillator oder optisches Filter, sowie in der Strukturkeramik z.B. in der Herstellung von Dentalkeramik, Bauteilen, Lagersteinen, Mahlkugeln, sowie in der farbigen Markierung von Bauteilen.

Weiterhin betrifft die Erfindung ein Verfahren zur Herstellung geformter Gegenstände aus diesem Material.

Korundkristalle, wie sie in der Natur gefunden werden, enthalten neben dem Hauptbestandteil Aluminiumoxid Verunreinigungen geringer Anteile von Metall-Ionen, die eine charakteristische Färbung hervorrufen können. Kristalle, bei denen ein Teil der Aluminium-Ionen durch Chrom-Ionen substituiert sind, werden aufgrund ihrer typischen Rotfärbung als Rubine bezeichnet. Durch bestimmte Kombinationen von Verunreinigungen z.B. Ti, Si, Fe, Cu, Mg, Zn, Ni, V, Co, Mn werden in der Natur eine Vielzahl farbiger Variationen gefunden. Diese Korunde bezeichnet man, ebenso wie die farblosen Spezies, als Saphire.

Natürlich vorkommende Kristalle können nach Politur der Oberfläche undurchsichtig, transluzent oder transparent sein. Der Unterschied zwischen transluzent und transparent wird dadurch definiert, dass man durch ein transparentes Material hindurchschauen und dahinter in einem Abstand von einigen Metern befindliche Gegenstände gut sichtbar erkennen kann. Ein transluzentes Material kann zwar eine insgesamt ähnlich hohe Gesamtlichtdurchlässigkeit haben, streut das Licht aber so stark, dass bei groberem Objektabstand keine direkte scharfe Abbildung möglich ist. Der Übergang von transluzent zu transparent ist kontinuierlicher Natur und kann daher nicht durch einen konkreten Zahlenwert beschrieben werden. Für die messtechnische Erfassung des Lichtanteils, der direktgerichtet das Material durchläuft, muss der Durchgang eines parallelgerichteten Lichtstrahls, der rechtwinklig auf die Materialoberfläche auftrifft, betrachtet werden. Wenn durch enge Aperturwinkel um 0.5° Streuanteile weitgehend ausgeschlossen werden, ist die so an Scheiben mit ca. 0.8-1 mm Dicke bestimmte In-Line-Transmission im sichtbaren Bereich für Stoffe höherer Transparenz im Allgemeinen > 45 %, während transluzente Materialien Werte < 20 % zeigen. Häufig werden allerdings in der Literatur auch Werte für so genannte "In-Line"-Transmissionen angegeben, die bei größeren Aperturwinkeln gemessen wurden und deshalb Anteile gestreuten Lichtes enthalten.

Neben der Anwendung als Schmuck sind Rubine und Saphire aufgrund ihrer guten mechanischen Eigenschaften, der hohen Temperaturbeständigkeit und der optischen Eigenschaften für technische Anwendungen von Interesse. Dafür wird überwiegend synthetisches Material eingesetzt.

Für die Züchtung von Rubin und Saphirkristallen sind nach dem Stand der Technik drei Grundprinzipien bekannt, die auf folgenden physikalischen Prinzipien beruhen:

Aufschmelzen von Korundpulver auf einem Kristallkeim.

Die auf diesem Prinzip beruhenden Verfahren gehen auf die von Verneuil zu Beginn des 20. Jahrhundert entwickelte Synthese zurück und stellen in einer Vielzahl verschiedener Farbvarianten den Hauptanteil des synthetischen Materials. Durch verschiedene technische Modifikationen wurde die Qualität insbesondere hinsichtlich der Defekthäufigkeit und der Kristallgröße verbessert. Beispiele dafür sind das Czochralskiverfahren (z.B. Markenname "Inamori", Kyocera, Japan, 1980), Zonenschmelzverfahren (z.B. Markenname "Bijoreve" Seiko, Japan, 1983) und das Wärmeaustauschverfahren (Crystal Systems, USA, 1969).

Lösen von Korundpulver und farbgebenden Zusätzen in einem geschmolzenen Flussmittel und Auskristallisation aus der Schmelze.

Es entstehen hochwertige Synthesen, die aufgrund des hohen Zeitaufwandes und der geringen Kristallgröße vor allem für Schmuck Anwendung finden. Nach dieser Methode hergestellte Rubine werden von Chatham seit 1959, blaue und orange Saphire seit 1972 bzw. 1978 vermarktet. Andere nach diesem Prinzip hergestellte Synthesen sind z.B. unter den Markennamen Kashan (Austin, Texas, seit ca. 1968), Knischka (Innsbruck, Österreich, seit ca. 1980), Ramura (Los Angelas, USA seit ca. 1983) Lechleitner (Innsbruck, Österreich, seit ca. 1983) und Douros (Piraeus, Griechenland, seit ca. 1993) bekannt. Als Flussmittel werden z.B. Na₃AlF₈ (Kashan), Li₂O-MoO₃-PbF₃ / PbO₂NaF₆ (Chatham), Bi₂O₃-La₂O₃-PbF₂ / PbO₂ (Ramura) eingesetzt.

Hydrothermalsynthese, d.h. Lösen von Korundpulver und farbgebenden Zusätzen in einer wässrigen Flüssigkeit bei hohem Druck und Auskristallisation der Kristalle (Tairus, Novosibirsk, Rubin 1993, Saphir 1996)

Einen Überblick zum Stand der Technik geben die Bücher "Ruby & Sapphire" von R.W. Hughes, RWH Publishing, Boulder, Colorado USA, 1997 und "Gems made by man" von K.Nassau, Chilton, Radnor Pennsylvania USA, 1980.

Diese bekannten Rubin- und Saphirsynthesen sind zeit- und energieaufwendig und haben den Nachteil, dass die gezüchteten Einkristalle kostenaufwendig durch Hartbearbeitung mit Diamant in die gewünschte Form gebracht werden müssen und die maximale Größe durch die Maße der Einkristalle begrenzt ist.

Für die Herstellung geformter Einkristalle sind Methoden zum gesteuerten punktuellen Aufwachsen von Saphir-Einkristallen aus einer Schmelze bekannt (EFG-Methode, Stepanov-Methode). (siehe V.N.Kurlov und F.Theodore, "Growth of Sapphire Crystals of Complicated Shape" Cryst.Res.Technol., Vol. 34, (1999) S.293-300). Diese Verfahren erfordern jedoch eine anspruchsvolle Apparatetechnik und unterliegen Restriktionen hinsichtlich der realisierbaren Formen. Außerdem ist die Makrohärte der Einkristalle im Allgemeinen auf HV10 (Vickers-Härte gemessen unter einer Prüfbelastung von 10 kg) von weniger als 19 GPa und ihre Bruchzähigheit auf < 3 MPa√m beschränkt.

Es ist daher wünschenswert, durchsichtige Al₂O₃-Materialien für den Anwendungsbereich der bekannten einkristallinen Rubine und Saphire durch eine einfachere keramische Technologie herzustellen, die es ermöglicht, eine Vielzahl nahezu beliebiger Formen und Abmessungen zu produzieren. Ein solches Material besteht aus einer Vielzahl einzelner Kristallite mit regelloser Orientierung und ist daher in seinen mechanischen Eigenschaften isotrop, wodurch Eigenschaftsnachteile der Einkristalle vermieden werden.

Ein farbloses polykristallines Korundmaterial ("polycrystalline Alumina"- PCA) ist durch Coble (US 3026210) bekannt geworden. Ein nahezu porenfreier Sinterkörper kann demnach durch Zusatz von < 0.5 Ma.-% MgO und Sinterung bei 1770-1950 °C, vorzugsweise in Wasserstoffatmosphäre erhalten werden. Die mittlere Teilchengröße dieses PCA liegt bei 15-50 µm. Das Kornwachstum wird entscheidend von der Reinheit des Ausgangsmaterials und der Zugabe von Dotierungen beeinflusst. Polykristalline transluzente Aluminiumoxidkeramik wird z.B. in keramischen Brennern von Hochdrucklampen eingesetzt. Jedoch ist dieses Material nur transluzent und eignet sich daher nur ungenügend zur Imitation von Rubinen und Saphiren.

Es ist bekannt, dass der Verdichtungsvorgang beim Sintern von Korund durch bestimmte Dotierungen beeinflusst werden kann. Petzold und Ulbricht nennen u.a. Li₂O, MgO, CaO, CoO, NiO, ZnO, MnO, SiO₂, TiO₂, ZrO₂, Y₂O₃, Cr₂O₃, WO₃, (A.Petzold und J. Ulbricht, Aluminiumoxid, Deutscher Verlag für Grundstoffindustrie, Leipzig 1991). Der genaue Wirkmechanismus dieser Dotierungen wird noch kontrovers diskutiert. Diese nach dem Stand der Technik üblichen Sinterhilfsmittel werden im allgemeinen in einer Menge von 0.05-0.5 Ma.-% zugegeben und dienen der Beeinflussung der Mikrostruktur. Es können zwar im Einzelfall Verfärbungen der Keramik eintreten, die Färbungen sind jedoch Pastell und auch bei hohen Konzentrationen farbgebender Zusätze oft verweißlicht.

Einen lichtdurchlässigen rotgefärbten, polykristallinen Aluminiumoxidkörper für die Anwendung als Lagerstein in Uhren, der 0.1-1.0 Ma.-% Strontiumoxid enthält und zusätzlich Magnesiumoxid und Chromoxid enthalten kann beschreibt DE 28 52 140 A1. Für die Kombination 2Ma.-% Cr₂O₃/ 0.2 % MgO wird eine mittlere Gefügekorngröße des Sinterkörpers von 16-22 µm angegeben. Durch Zusatz von 0.3 Ma.-% SrO wird die mittlere Gefügekorngröße auf 9-11 µm vermindert. Die für die Lichtdurchlässigkeit angegebenen Daten einer In-Line-Transmission (gemessen mit ungenannter Apertur) von im Höchstfall 22-24% im Bereich von 380-700nm entsprechen höchsten 8% bei einer Dicke von 0.8 mm und zeigen, dass es sich bei diesem Sintermaterial um ein lediglich transluzentes und keineswegs durchsichtiges Produkt handelt.

Ebenfalls für Uhrensteine wird in der Anmeldung US2002/0135108 A1 ein polykristallines durch Chromoxid rotgefärbtes Korundmaterial beschrieben. Es werden keine Teilchengrößen für das Gefüge und auch keine Messwerte für die Transparenz angegeben. Die Sintertemperatur von 1800°C In Wasserstoffatmosphäre zeigt aber, dass es sich auch hier um grobkristallines PCA handelt. Das Material wird als transluzent bezeichnet.

In WO 98154109 wird u.a. ausgeführt, dass solches grobkristallines keramisches Korundmaterial für Schmucksteine nicht verwendbar ist, weil beim Facettieren an den Kanten Ausbrüche auftreten.

Ein Verfahren zur Konvertierung von farblosem polykristallinem PCA-Gefüge in ei n-kristalline Bereiche ist mit EP 0667404 B1 bekannt geworden.

Dies wird durch Zugabe von Dotierungen der genannten Elemente Cr, Ga, V, Ce, La, Sm oder Ti in so geringen Mengen, dass die Löslichkeitsgrenze im Korundgitter nicht überschritten wird, erreicht. In US6475942 wird die Erfindung auf die Elemente Mo und W als Dotierungen erweitert, u.a. deshalb, weil z.B. Cr zu unerwünschten Verfärbungen führen kann.

EP 1053983 A2 offenbart eine transluzente Aluminiumoxidkeramik aus Sub-Mikrometer Gefüge, die jedoch ausdrücklich nur Dotierungen enthalten soll, welche dem Material keine Färbung geben. Umgekehrt beschreibt DE 41 24 630 C2 eine intensiv gefärbte Al₂O₃-Keramik mit Sub-Mikrometergefüge und hoher Farbintensität, die aber undurchsichtig ist und nur als gesintertes Granulat hergestellt werden kann.

In der Technik sind einige durchsichtige polykristalline keramische Materialien bekannt, wie z.B. Yttriumoxid (stabilisiert), Y₂Al₅O₁₂ (YAG), LiAl₅O₆, ALON und Magnesiumspinell. In der Regel wird dabei der Sintervorgang durch einen Heißpressvorgang und stoffabhängig durch Zugabe bestimmter Dotierungen unterstützt. Im Gegensatz zum Korund bestehen diese Materialien aber aus kubischen, d.h. optisch isotropen Kristallgittern. Die Größe der einzelnen Kristallite im dichtgesinterten Material liegt in der Regel im Bereich > 10 µm.

Bei dichtgesintertem Aluminiumoxid kann dagegen aufgrund des optisch anisotropen trigonalen Kristallsystems keine vollständige Transparenz erreicht werden. Das durchgehende Licht wird an jedem Kristallit in zwei Teilstrahlen aufgespalten (Doppelbrechung).

Der Erfindung liegt die Aufgabe zugrunde ein farbiges transparentes Korundmaterial mix polykristallinem sub-µm Gefüge zu entwickeln, welche eine möglichst geringe Korngröße des Korunds und eine möglichst homogene Verteilung der farbgebenden Dotierung aufweist. Das Verfahren soll es gestatten auch komplex geformte Gegenstände durch einen keramischen Formgebungs- und Brennprozess herzustellen und soll gegenüber den bekannten Verfahren zur Herstellung einkristallinen Korunds wesentlich einfacher, flexibler und kostengünstiger sein.

Die Aufgabe wird durch die in den Ansprüchen angegebene Erfindung gelöst. Weiterbildungen sind Gegenstand der Unteransprüche.

Bei dem erfindungsgemäßen farbigen durchsichtigen Korundmaterial aus polykristallinem sub-µm Gefüge einer mittleren Teilchengröße < 1µm und einer Dichte >99,9% der theoretischen Dichte unterscheidet sich das Transmissionsspektrum vom Spektrum des nicht mit farbgebenden Dotierungen versehenen mindestens 99.95% reinen Sub-Mikrometer-Korundmaterials, durch das Auftreten einer absorptionsbedingt verringerten Transmission in einem oder mehreren Teilen des sichtbaren Spektrums, so dass eine visuell erkennbare Färbung des Materials hervorgerufen wird.

Vorteilhafterweise sind polierte Scheiben aus dem Material bis zu einer Dicke von 0.8 mm, noch vorteilhafterweise bis zu einer Dicke von 3 mm, transparent.

Weiterhin vorteilhafterweise ist die Färbung durch farbgebende Dotierungen erzeugt, die im Korundgitter als feste Lösungen vorliegen, wobei als farbgebende Ionen, die von natürlichen und synthetischen einkristallinen Rubinen und Saphiren bekannten Dotierungen, insbesondere Cr, Ni, Fe, Ti, V, Co, in den von natürlichen und synthetischen einkristallinen Rubinen und Saphiren bekannten Konzentrationen von 0.01-3 Ma.-% verwendet sind, oder die Färbung erfolgt durch Einlagerung farbgebender anorganischer Verbindungen, insbesondere durch Al enthaltende Pigmente, wie Spinelle und Granate, im Gefüge, wobei die Farben rot, blau, grün und gelb und Farbmischungen aus diesen Farben in abgestuften Farbsättigungen durch farbgebende Dotierungen und färbende Einlagerungen realisiert sind.

Ebenfalls vorteilhafterweise beträgt die mittlere Teilchengröße der Korundkristallite 0.3 bis 0.8 Mikrometer und beträgt der Brechungsindex 1.76 - 1.77.

Weiterhin von Vorteil ist es auch, wenn die Transmission des direkt ungestreut durchgehenden Lichtes an einer 0.8 mm dicken polierten Scheibe bei einer Wellenlänge aus dem sichtbaren Bereich des elektromagnetischen Spektrums > 45 % ist oder wenn durch Dotierungsinhomogenitäten Farbübergänge und Farbinhomogenitäten im Material erzeugt sind.

Von Vorteil ist es auch, wenn die Härte HV 10 des Korundmaterials bei mindestens 19 GPa liegt.

Bei dem erfindungsgemäßen Verfahren zur Herstellung eines farbigen durchsichtigen Korundmaterials mit polykristallinem sub-µm Gefüge wird eine gleichmäßige Färbung in einem Grünkörper erreicht, indem der Grünkörper vor der Trocknung und den a n-schließenden thermischen Behandlungen mit einer Flüssigkeit, die gelöste Metallionen oder Metallatome oder -ionen enthaltende Verbindungen enthält, infiltriert wird.

Vorteilhafterweise wird eine Flüssigkeit eingesetzt, die lösliche anorganische Salze oder metallorganische Verbindungen enthält und eine thermische Behandlung realisiert, die aus einem optionalen Ausbrennvorgang, einer Vorsinterung, die dem Erreichen einer geschlossenen Porosität dient und einer heissisostatischen Nachverdichtung unter Druck besteht.

Ebenfalls vorteilhafterweise wird eine Sinterung realisiert, bei der eine Sintertemperatur von 1400 °C nicht überschritten wird und/oder keine Wasserstoffatmosphäre beim Sintern verwendet wird und/oder auf Mg-Dotierung als Sinterhilfsmittel verzichtet wird.

Weiterhin von Vorteil ist, wenn die Färbung durch einen weiteren Tempervorgang in sauerstoffhaltiger, reduzierender oder inerter Atmosphäre verändert wird.

Ebenfalls von Vorteil ist, wenn die herzustellende Gestalt des Gegenstandes durch Verpressen von Korundpulver in eine Form, oder durch Gießen einer Korund enthaltenden Suspension in eine Form, oder durch Grünbearbeitung des ungesinterten Materials oder durch Hartbearbeitung des gesinterten Materials durchgeführt wird.

Erfindungsgemäß wird das erfindungsgemäße farbige durchsichtige Korundmaterial mit polykristallinem sub-µm Gefüge für transparente, transluzente und undurchsichtige farbige Formteile verwendet.

Vorteilhafterweise wird das erfindungsgemäße farbige durchsichtige Korundmaterial mit polykristallinem sub-µm Gefüge als Substitutionsmaterial für Formteile, die ansonsten aus einkristallinem Material durch aufwendige Hartbearbeitung hergestellt werden müssen, oder als Imitation von einkristallinem Rubin und Saphir oder für optische Fenster, Filter und Szintillatoren, für dekorative Formteile, dreidimensionale figürliche Abbildungen und Dentalkeramik, facettierbare Schmucksteine, hitzebeständige und verschleißfeste Bauteile und zur farblichen Kennzeichnung und Markierung verwendet.

Gewöhnliche Korundkeramik ist weiß und undurchsichtig, weil Poren ebenso wie Fremdpasenbestandteile im Material aufgrund des Brechungsindexunterschiedes als Streuzentren wirken. Eine Voraussetzung für die Herstellung transparenter Keramik ist es daher, den Sinterprozess so zu führen, dass eine vollständige Verdichtung des Materials erreicht wird.

Dichtgesinterte transluzente Korundkeramik unterscheidet sich von den bekannten dichtgesinterten transparenten Keramiken anderer chemischer Zusammensetzung durch ein anisotropes Kristallgitter.

Entlang der optischen Achse (c-Achse) wird für Korund allgemein ein Brechungsindex von 1.770 angegeben. In allen anderen Raumrichtungen wird das Licht in zwei Teilstrahlen aufgespalten, so dass der Brechungsindex je nach Orientierung zwischen 1.770 und 1.762 variiert (Doppelbrechung). Dieser Brechzahlunterschied führt im Polykristall durch die unterschiedliche Orientierung der Kristallite zur Streuung des Lichtes.

Die Lichtstreuung an Teilchen wird allgemeingültig durch die Mie-Theorie beschrieben. (H.C. van de Hulst, "Light Scattering by Small Particles", Dover Publications, Inc., New York, 1981).

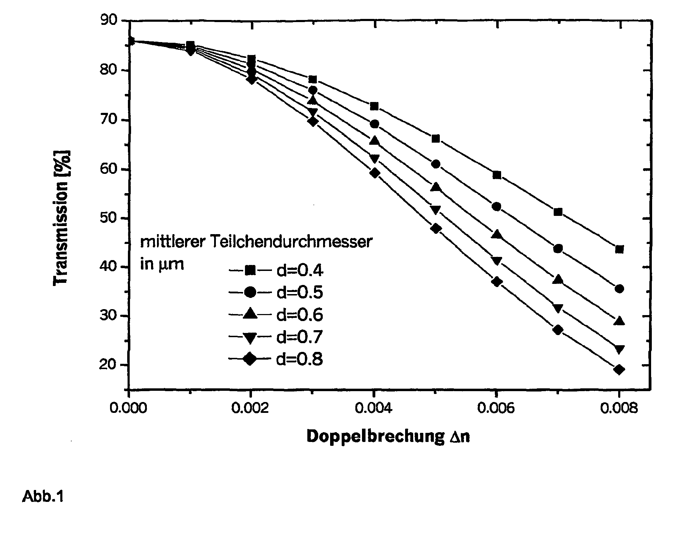

Es ist bekannt, dass der Streuanteil neben der Wellenlänge und der Brechungsindexdifferenz vor allem von der Größe der Partikel abhängt. Eine Abschätzung der durch die Doppelbrechung verursachten Lichtstreuung bei 620 nm Wellenlänge, berechnet nach Mie, in Abhängigkeit von der Teilchengröße unter der Annahme kreisrunder Teilchen zeigt Abbildung 1. Die Transparenz kann wegen der Reflexion von etwa 7 % an beiden Materialoberflächen maximal 86 % erreichen. Es wird der Anteil des direkt durchgehenden Lichtes ohne Mehrfachreflexionen für eine Materialdicke von 0.8 mm betrachtet. Die mittlere Doppelbrechung im realen polykristallinen Gefüge hängt von der Orientierungsverteilung der Kristallite und von eventuell vorhandenen makroskopischen und mikroskopischen Spannungseinflüssen ab.

Das Modell enthält naturgemäß eine Reihe von Vereinfachungen, so werden Einflüsse von Poren und Korngrenzen vernachlässigt und es wird von einer einheitlichen Partikelgröße mit einheitlichem Brechungsindex in einer Umgebung unterschiedlichen Brechungsindexes ausgegangen.

Abbildung 1 verdeutlicht den prinzipiellen Zusammenhang, dass eine Verbesserung der Transparenz durch Verringerung der Teilchengröße und/oder durch Verringerung der Doppelbrechung zu erwarten ist (Apetz und van Bruggen, J. Am. Ceram. Soc. 86 [3] 480-86 (2003)).

Herstellungsmethoden für derartige farblose durchsichtige Korundkeramiken, deren mittlere Gefügekorngröße im Gegensatz zum bekannten PCA um fast 2 Größenordnungen geringer ist, werden z.B. von Krell et al in J. Am. Ceram. Soc. 86 [4] 546-53 (2003) und J. Am. Ceram. Soc. 86 [1] 12-18 (2003), sowie von Grathwohl und Godlinski in DE 101 01 169 beschrieben. Aus diesen Veröffentlichungen ist bekannt, dass solche farblosen transparenten Materialien nur mit hochreinen Ausgangsmaterialien (> 99.99 % Reinheit) hergestellt werden können und der Sinterprozess äußerst sensibel durch Verunreinigungen und Dotierungen beeinflusst wird.

Insbesondere wurde in der Literatur wiederholt über die komwachstumsfördemde Wirkung färbender Dotierungen, wie z.B. Cr³⁺, beim Sintern von Al₂O₃-Keramiken und die Schwierigkeiten derartige Keramiken zu einer Dichte > 99.9 % zu Sintern, berichtet. (siehe dazu z.B.: M.T. Hernandez, M. Gonzales, A. De Pablos,"C-diffusion during hot press in the Al2O3-Cr2O3 system" In Acta Materialia 51 (2003) 217-228 und D.H. Riu, Y.-M. Kong, H.-E. Kim, "Effect of Cr2O3 addition on microstructural evolution and mechanical properties of Al2O3", J. Europ. Ceram. Soc.20 (2000) 1475-1481).

EP 06 674 04 beschreibt sogar ein Verfahren zur 100%igen Transformation von PCA-Keramik zu einkristallinem Saphir, welches auf der komwachstumsfördemden Wirkung geringer Dotierungsmengen dreiwertiger Kationen wie z.B. Chrom beruht.

Überraschenderweise zeigte sich hingegen im Rahmen der vorliegenden Erfindung, dass sich Gefügekomgrössen von deutlich < 1 µm in polykristallinem Korund mit einer Dichte von > 99.9 % realisieren lassen, obwohl dem Material Dotierungen in Größenordnungen, wie sie von einkristallinen Rubinen und farbigen Saphiren bekannt sind, zugesetzt wurden. In den Ausführungsbeispielen wird beschrieben, dass unter den Herstellungsbedingungen der vorliegenden Erfindung kein durch die angegebenen Dotierungen, wie z.B. Chrom, beeinflusstes Kornwachstum und auch keine Umwandlung zu Einkristall beobachtet wurde.

Weiterhin zeigten die Experimente, dass bei Eliminierung der Restporosität des sub-Mikrometergefüges mit dem dadurch bewirkten Übergang zu höherer Lichtduchlässigkeit auch eine Umwandlung von hellen pastellartigen Färbungen zu deutlich intensiveren Farben höherer Farbsättigung eintritt.

Die Farbgebung kann wie beim einkristallinen Rubin und Saphir allochromatisch durch teilweise Substitution von Al-lonen im Korundgitter der Kristallite hervorgerufen werden. Voraussetzung dafür ist die Löslichkeit der Dotierungsionen im Gitter, sowie die Gewährleistung einer homogenen Verteilung. Die Färbung wird durch den Ladungszustand und die Kombination bestimmter Dotierungsionen im Kristallgitter (Ladungstransfer), sowie durch Defekte im Kristall (Farbzentren) mitbestimmt.

Der mikrostrukturelle Aufbau des polykristallinen Gefüges eröffnet die Möglichkeit gezielt auch idiochromatische Fremdphasen (z.B. farbige Pigmente, Spinelle, Granate) im Gefüge zu platzieren bzw. mit Dotierungskonzentrationen zu arbeiten, die außerhalb der Löslichkeitsgrenzen des Korunds liegen. Die Fremdphasenbestandteile können als Partikel oder reaktive Vorstufen dem Korundpulver beigemengt werden oder während eines Tempervorganges als thermodynamisch stabiles Reaktionsprodukt erzeugt werden. Die Verringerung der Transparenz durch Streuung an Fremdphasenpartikeln hängt dabei wesentlich ab von Brechungsindexunterschied, Teilchengröße der Partikel und Konzentration. Überraschenderweise zeigte sich, dass sich z.B. durch Einlagerung von Kobaltspinell ein leuchtend blau gefärbtes transparentes Material realisieren lässt.

Unabhängig vom zu Grunde liegenden Mechanismus tritt durch die farbgebenden Dotierungen Absorption im Material auf. Dadurch wird die Transmission in bestimmten Wellenlängenbereichen des Spektrums des Lichtes geschwächt und das Material erscheint farbig. Im Vergleich zum einkristallinen Material wird die Transparenz des polykristallinen Materials weiterhin durch eingelagerte Fremdpartikel oder durch Lichtstreuung an den Al₂O₃-Kristalliten vermindert. Diese Streueffekte sind im IR-Bereich nur gering, werden aber umso größe, je kleiner die Wellenlänge des Lichtes ist.

Im direkten Vergleich mit natürlichen und synthetischen einkristallinen Rubinen und Saphiren sind die erfindungsgemäßen polykristallinen farbigen Korunde eher den natürlichen Steinen ähnlich, da sie nicht die unnatürlich hohe Durchsichtigkeit der einkristallinen Synthesen aufweise. Sie sind dabei aber deutlich durchsichtiger als die bisher bekannten transluzenten grobkristallinen PCA Materialien.

Das erfindungsgemäße submikrometerkristalline Material unterscheidet sich von den bekannten auf PCA beruhenden farbigen Materialien mit einer mittleren Partikelgröße > 10 µm durch die Eigenschaft, dass man durch die farbigen Scheiben mit polierten Oberflächen ähnlich wie bei einem Fenster hindurchschauen kann und z.B. dahinter befindliche Schrift im Anstand von mehreren Metern lesen kann. Weiterhin unterscheidet sich das erfindungsgemäße Material dadurch, dass die Transparenz auch bei Beimischung farbgebender Dotierungen erhalten bleibt, so dass es möglich ist, in den Farben rot, grün, gelb, blau Farbabstufungen, Farbmischungen und Helligkeitsabstufungen zu erzeugen.

Weiterhin unterscheidet sich das erfindungsgemäße Verfahren wesentlich dadurch, dass die Keramik bei einer deutlich geringeren Sintertemperatur von ca. 1100-1400 °C hergestellt wird und dafür keine Wasserstoffsinterung erforderlich ist. Weiterhin unterscheidet sich das erfindungsgemäße Material dadurch, dass eine Mg-Dotierung als Sinterhilfsmittel nicht zwingend erforderlich ist.

Der Begriff farbig wird im Zusammenhang mit dem erfindungsgemäßen transparenten sub-Mikrometer-Korundmaterial durch die Eigenschaft definiert, dass das Transmissionsspektrum sich vom Spektrum des nicht mit farbgebenden Dotierungen versehenen, mindestens 99.95% reinen Sub-Mikrometer-Korundmaterials, durch das Auftreten einer absorptionsbedingt verringerten Transmission in einem oder mehrerer Teile des sichtbaren Spektrums unterscheidet, so dass eine visuell erkennbare Färbung des Materials hervorgerufen wird.

Die zu den Ausführungbeispielen angegebenen Spektren wurden mit einem UV-Vis/NIR-Spektrophotometer Shimadzu UV-3101 PC gemessen.

Die in den Ausführungsbeispielen angegebenen Messwerte für die Transmission wurden entsprechend der DIN5036 mit einem Messgerät LCTRT-2006-06R/T (Gigaherz-Optik, Puchheim) bei einer Wellenlänge von 640 nm und einem Aperturwinkel von 0.57° gemessen. Dieser Messwert stellt die "wahre" (real) In-line-Transmission, d.h. den Anteil des ungestreut durchgehenden Lichtes der Messwellenlänge dar. Die Messung der In-Line-Transmission und die Messung der Spektren wurde an polierten Scheiben von 0.8 mm Dicke durchgeführt.

### Verzeichnis der Abbildungen

Abb.1 zeigt den Einfluss von Partikelgröße und Doppelbrechung auf die Transmission von polykristallinenem porenfreien Korund bei einer Wellenlänge von 620nm für eine Materialdicke von 0.8mm, berechnet nach der Streutheorie von Mie, unter Verwendung des Algorithmus von van de Hulst (H.C. van de Hulst, "Light Scattering by Small Particles", Dover Publications, Inc., New York, 1981, S.119-140).

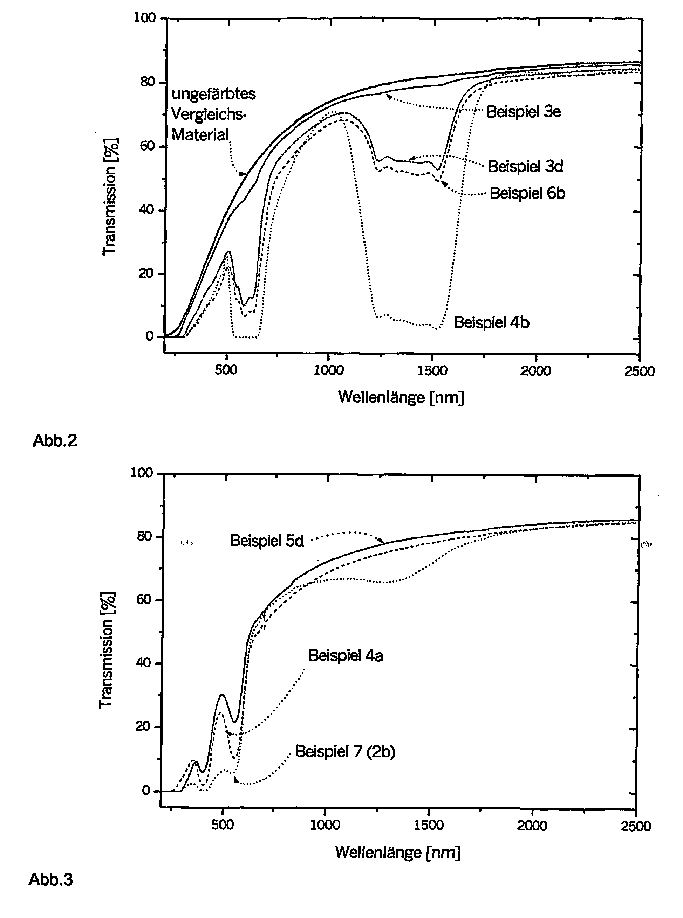

Abb.2 zeigt Transmissionsspektren von blaugefärbten ca. 0.8 mm dicken Scheiben (Ausführungsbeispiele 3e, 3d, 6b und 4b), sowie ein ungefärbtes nicht mit färbenden Dotierungen versehenes Material zum Vergleich, gemessen mit einem UV-Vis / NIR-Spektrophotometer (Shimadzu UV-3101 PC). Die dargestellten Spektren demonstrieren die wellenlängenabhängige Transmission im Bereich von 250-2500 nm.

Abb.3 zeigt Transmissionsspektren von rotgefärbten ca. 0.8 mm dicken Scheiben (Ausführungsbeispiele 4a, 5d, und 7 (2b nach thermischer Behandlung)), gemessen mit einem UV-Vis / NIR-Spektrophotometer Shimadzu UV-3101 PC. Die dargestellten Spektren demonstrieren die wellenlängenabhängige Transmission im Bereich von 250-2500 nm.

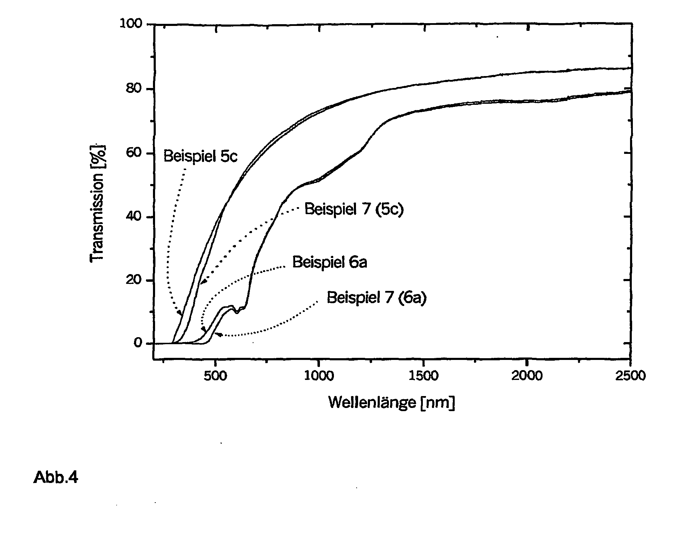

Abb.4 zeigt Transmissionsspektren von grüngefärbten ca. 0.8 mm dicken Scheiben (Ausführungsbeispiele 5c, 6a, 7 (6a nach thermischer Behandlung)) sowie ein Spektrum einer gelbgefärbten ca. 0.8 mm dicken Scheibe (Ausführungsbeispiel 7 (5c nach thermischer Behandlung)), gemessen mit einem UV-Vis / NIR-Spektrophotometer (Shimadzu UV-3101 PC). Die dargestellten Spektren demonstrieren die wellenlängenabhängige Transmission im Bereich von 250-2500 nm.

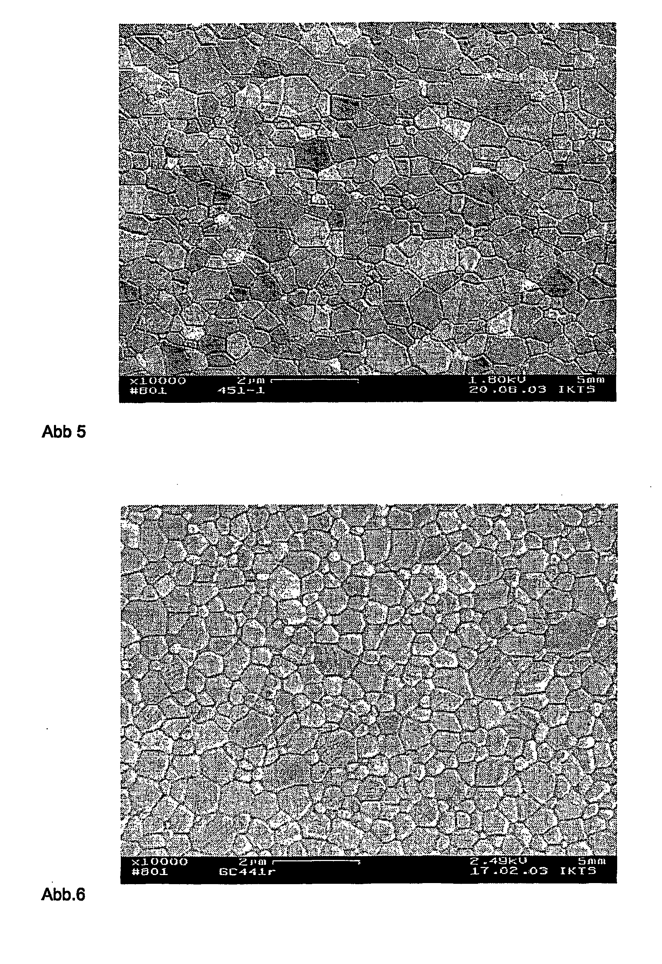

Abb.5 zeigt kobaltdotiertes Al₂O₃-Gefüge in 10000facher Vergrößerung, beschrieben in Beispiel 3.

Abb.6 zeigt ein chromdotiertes transparentes Al₂O₃-Gefüge in 10000facher Vergrößerung, beschrieben in Beispiel 4.

Die Herstellungsweise und die Wirkungen der erfindungsgemäßen Lösung sind folgende.

Als Ausgangsmaterial wird beispielsweise ein Korundpulver mit einer mittleren Teilchengröße von etwa 200 nm verwendet. (TM-DAR Korundpulver, Boehringer Ingelheim). Dem Korundpulver können Nanopartikel aus Aluminiumoxid (z.B. bis zu 10 % Disperal, Condea Chemie Hamburg mit einer mittleren Partikelgröße von 10 nm oder bis zu 2 % Aeroxide Alu C, Degussa AG Düsseldorf) mit einer mittleren Partikelgröße von 13 nm zugesetzt werden, ohne dass die Sintereigenschaften davon wesentlich verändert werden.

Für die Herstellung der keramische Grünkörper sind prinzipiell die nach dem Stand der Technik bekannten Verfahren zur Herstellung keramischer Körper (z.B. Trochenpressen, kaltisostatisches Pressen, Schlickergiessen, kolloidale Formgebung, Gelcasting) geeignet.

Flüssige Formgebungsverfahren haben allerdings im allgemeinen den Vorteil einer besseren Partikelhomogenität, wodurch makroskopisch höhere Dichten bei vergleichsweise niedrigeren Sintertemperaturen und damit geringerem Teilchenwachstum ermöglicht werden. Weiterhin ist es für viele Anwendungszwecke vorteilhaft, wenn die Grünkörper durch Gießen einer Suspension in eine Form, welche die gewünschte Gestalt des Endkörpers zuzüglich Schwindung vorgibt, hergestellt werden können.

Einem bevorzugtem Ablauf nach wird zunächst ein korundhaltiger dünnflüssiger Schlicker hergestellt, welcher Monomere enthält, die nach Polymerisation das Wasser des Schlickers binden. Die Dispergierung der Teilchen kann durch die in der Technik zur Dispergierung von Aluminiumoxidpulver bekannten Dispergierhilfsmittel z.B. Darvan A, Darvan C oder Dolapix CE64 in Verbindung mit einem geeigneten pH-Wert im basischen Bereich oder durch Einstellung eines sauren pH-Wertes zwischen 2.5 und 5 erfolgen.

Der Schlicker wird in Form gegossen, entgast, polymerisiert, entformt und mit einer die Dotierung enthaltenden Lösung infiltriert. Danach wird getrocknet, ausgebrannt, gesintert und heissisostatisch nachverdichtet. Die Schwindung beim Sintern beträgt ca. 20-25 % und muss beim Design der Gießform berücksichtigt werden. Die gewünschte Gestalt des Materials kann auch durch Grünbearbeitung im getrockneten oder vorgebrannten Zustand z.B. mit handelsüblichem Schleifpapier erfolgen.

Zur Gewährleistung einer homogenen Dotierung sollte die Teilchengröße der Dotierung deutlich kleiner sein als die Teilchengröße der Korundpartikel. Deshalb ist es günstig, die Dotierung in gelöster Form mittels einer Flüssigkeit einzubringen. Dies kann z.B. durch Infiltration des feuchten oder trockenen Grünkörpers erfolgen. Für einfache Geometrien können die Grünkörper z.B. auch mittels Trockenpressen und anschließender Infiltration mit Dotierungslösung hergestellt werden. Denkbar ist auch eine Beschichtung des Korundausgangsmaterials oder der Zusatz von Dotierungspartikeln zum Korund und anschließende Homogenisierung z.B. durch Mahlung oder Einbringung farbgebender Dotierungen durch den Abrieb spezieller Mahlkörper. Die in den Ausführungsbeispielen beschriebene Dotierung durch Salzlösungen hat den Vorteil, dass sich auf einfache Art und Weise mit einer einheitlichen Prozedur alle Spektralfarben erzeugen lassen.

Kleinere Unterschiede in der Transparenz von etwa 5 % sind zwar messtechnisch erfassbar, dem Augenschein nach aber kaum wahrnehmbar. Daher können auch mit weniger optimierten einfacheren Herstellungsbedingungen für bestimmte Anwendungen akzeptable Ergebnisse erzielt werden. Dies betrifft z.B. auch Farbeffekte oder Farbverläufe, die durch Inhomogenität der Dotierung hervorgerufen werden.

Die Sintertemperatur muss so hoch sein, um die Dichtsinterung zu erzielen, dabei aber auch möglichst niedrig, um Teilchenwachstum zu beschränken. Es sind daher alle Maßnahmen sinnvoll, die darauf abzielen, die Sinterdichte bei geringer Temperatur zu erhöhen. Dies kann durch zusätzliche Druckbehandlung oder spezielle Form der Zuführung der thermischen Energie (z.B. Lasersintern, Spark Plasma Sintering, Mikrowellensintern) erfolgen. Die Sinterungen in den beschriebenen Beispielen erfolgten an Luft, die heißisostatische Verdichtung unter Argonatmosphäre im Kohlenstofftiegel, eingebettet in Korundpulver. Sinteratmosphären mit unterschiedlichen Reduktions- oder Oxidationspotentialen sind möglich, können aber zu abweichenden Farbtönen als den in den angeführten Beispielen führen.

Bei geformten Produkten muss zur Erzielung einer gewünschten Färbung die erforderliche Dotierung an die gewünschte Materialdicke angepasst werden. Für dickere Wandstärken werden mit geringeren Dotierungen ähnliche Farbsättigungen erzielt wie mit höheren Dotierungen für geringere Wandstärken. Infolge der Lichtstreuung nimmt die Transparenz mit zunehmender Materialdicke ab.

Selbstverständlich können aus dem Material auch Gegenstände hergestellt werden, die auf Grund der Materialdicke oder der Farbtiefe oder auf Grund ihrer Oberflächenbeschaffenheit nicht mehr transparent sind.

Die im folgenden dargelegten Ausführungsbeispiele stellen optimierte Varianten im Sinne bevorzugter Ausführungsformen dar, die gleichzeitig die Vorteile hoher Partikelhomogenität des Gefüges, einfacher Einbringung unterschiedlicher Dotierungen und die Möglichkeit zur Herstellung komplex geformter Körper vereinen. Die Beispiele schränken die Erfindung jedoch nicht hinsichtlich der Ansprüche ein.

### Beispiel 1

Zu einer Lösung der Monomere Polyethylenglycoldimethacrylat (Aldrich) mit einer mittleren Molmasse von 875 g/mol und Methacrylamid (Fluka) im Masseverhältnis 1:3 in deionisiertem Wasser wurde unter ständigem Rühren im Ultraschallbad TM-DAR-Korundpulver (dotiert entsprechend einem MgO-Gehalt von 0.03 Ma.-%) bis zu einem Feststoffgehalt von 72 Ma.-% bei 4 % Monomergehalt, bezogen auf das Korundpulver, zugegeben und dabei mit verdünnter Salpetersäure auf pH=4 eingestellt.

Danach wurde die Suspension in einer Schwingmühle mit yttriumstabilisierten Zirkonoxidkugeln unter Unterdruck (50 mbar) gemahlen und die Mahlkugeln von der Suspension abgetrennt. Durch Auswaage der Mahlkugeln wurde ein Abrieb von 0.067 Ma.-%, bezogen auf das eingesetzte Korundpulver, ermittelt.

Die Suspension wurde nach Zusatz von Ammoniumperoxodisulfatlösung als Polymerisationsinitiator in ein Glasgefäß auf ca. 5 mm Höhe gegossen, danach 2 h in einem Vakuumtrockenschrank bei 200 mbar entgast und schließlich unter Stickstoffatmosphäre 4 h bei 60 °C polymerisiert.

Nach Abkühlung wurde ein gummiartiger Körper entformt und aus diesem mit einem Stecheisen Scheiben von ca. 3 cm Durchmesser ausgestochen.

Die Scheiben wurden getrocknet und die Polymerreste bei 800 °C unter Luftzufuhr ausgebrannt.

Die weißen Scheiben nahmen nach ca. 12stündiger Infiltration unter ständiger Bewegung in 0.1 M Chrom(III)nitrat Nonahydratlösung (Aldrich) eine hellblaue Farbe an.

Nach zweistündiger Sinterung bei 1270 bzw. bei 1280 °C auf eine Dichte von etwa 95-97 % der theoretischen Dichte hatten die Scheiben eine hellrosa Färbung.

Durch heißisostatisches Pressen bei 1200 °C und 200 MPa in Argon-Atmosphäre erfolgte bei der bei 1280 °C gesinterten Scheibe eine drastische Farbvertiefung in eine durchgehend rubinfarbene transluzente Färbung. Nach Politur der Oberfläche oder in Immersionsflüssigkeit, z.B. Methylenjodid wurde die Scheibe transparent.

Die bei 1270 °C gesinterte Scheibe war hingegen undurchsichtig weiß mit nur ein i-gen roten Bereichen.

### Beispiel 2

Zu einer Lösung der Monomere Polyethylenglycoldimethacrylat (Polysciences inc., Warrington, PA, USA) mit einer mittleren Molmasse von 1000 g/mol und Methacrylamid (Fluka) im Masseverhältnis 1:3 in deionisiertem Wasser wurde unter ständigem Rühren im Ultraschallbad TM-DAR-Korundpulver (dotiert entsprechend einem MgO-Gehalt von 0.03Ma%) bis zu einem Feststoffgehalt von 72 M.-% bei 4 % Monomergehalt, bezogen auf das Korundpulver, zugegeben und dabei auf pH=4 mit verdün n-ter Salpetersäure eingestellt

Danach wurde die Suspension in einer Laborrührwerkskugelmühle mit hochreinen Korundmahlkugeln (Fraunhofer IKTS) gemahlen und die Mahlkugeln von der Suspension abgetrennt. Durch Auswaage der Mahlkugeln wurde ein Abrieb von 0.1 Ma.-%, bezogen auf das eingesetzte Korundpulver, ermittelt.

Die Suspension wurde nach Zusatz von Ammoniumperoxodisulfatlösung als Polymerisationsinitiator in ein Glasgefäß auf ca. 5 mm Höhe gegossen, danach 2 h in einem Vakuumtrockenschrank bei 200 mbar entgast und schließlich unter Stickstoffatmosphäre 4h bei 60 °C polymerisiert.

Nach Abkühlung wurde ein gummiartiger Körper entformt und aus diesem mit einem Stecheisen Scheiben von ca. 3 cm Durchmesser und 0.5 cm Dicke ausgestochen.

Diese Scheiben wurden mit Cr(NO₃)₃x9H₂O-Lösung folgender Konzentrationen in deionisiertem Wasser für 12 h bei Unterdruck von 200 mbar infiltriert:

| | | | | |
|---|---|---|---|---|
| a) 0.5M, | b) 0.25M, | c) 0.1 M, | d) 0.05M, | e) 0.01 M |

Die Scheiben wurden getrocknet und die Polymerreste bei 800 °C unter Luftzufuhr ausgebrannt. Mit abnehmender Konzentration der Chromnitratlösung nahm die blaugraue Färbung der Scheiben ab, so dass bei d) und e) nur eine geringe Verfärbung sichtbar war.

Nach Sinterung bei 1220 °C zeigten alle Scheiben eine rosa Farbe. Durch heißisostatische Nachverdichtung bei 1200 °C mit 15 h Haltedauer wurde das Material transluzent, verbunden mit einer drastischen Vertiefung der Färbung je nach Chromgehalt von tiefrubinrot (Probe a) bis hellrubinrot (Probe e).

Nach Politur der Oberflächen auf eine Rauhigkeit Rₐ ≤ 0.01 Mikrometer wurden die Scheiben transparent, so dass man z.B. durch eine rubinrote Scheibe aus Material a) von 0.8 mm Dicke hindurchsehen kann, ähnlich wie durch ein Fenster und z.B. dahinter befindliche Schrift in einigen Metern Abstand lesen kann.

In Probe a) wurde durch ICP-Analyse eine Chrom-Konzentrationen von 0.21% und in Probe e) von 0.03 % ermittelt.

Die röntgendiffraktometrische Analyse von Probe a) zeigte keine nachweisbaren Fremdphasen, aber eine signifikante Verschiebung der d-Werte, hervorgerufen durch die Substitution von Al³⁺ durch Cr³⁺ im Korundgitter.

Die mittlere Gefügekorngröße beträgt 0.70 Mikrometer, bestimmt an thermisch geätzten Gefügen nach der Sehnenabschnittsmethode aus dem 1.56fachen der mittleren Sehnenlänge von Feldemissions-Rasterelektronenmikroskop-Aufnahmen.

Aus dem Rohmaterial a), c) und e) wurden farbige transparente Steine von 1-1.5 ct. im Scherenschliff hergestellt und damit eine Farbabstufung von tiefrubinrot über rotviolett zu hellrosa realisiert. Das Material wurde vom Edelsteinschleifer als problemlos schleifbar eingeschätzt, allerdings mit einer etwas höheren Härte und Zähigkeit im Vergleich zum konventionellen einkristallinen Material. Die in WO 98/54109 beschriebenen Probleme beim Facettieren wurden nicht beobachtet. An Material a) wurde eine Härte HV10 von 1922±22 ermittelt.

Für Material e) wurde an 0.83 mm dicken Scheiben bei 640 nm Wellenlänge eine In-Line-Transparenz von 55.3 %, für Material c), mit der 10fachen Dotierungskonzentration, eine In-Line-Transparenz von 47.1% und für das mit der 25fachen Konzentration dotierte Material b) wurde nach einem in Beispiel 7 beschriebenen Tempervorgang eine In-Line-Transparenz von 45.4 % gemessen.

### Beispiel 3

Die Herstellung der Proben erfolgt wie in Beispiel 2 beschrieben. Anstatt Chromnitratlösung wurde jedoch mit Kobalt(II)nitrat-Hexahydrat-Lösungen (Riedel-de-Häen) folgender Konzentrationen infiltriert:

| | | | | |
|---|---|---|---|---|
| a) 0.5M, | b) 0.25M, | c) 0.1M, | d) 0.05M, | e) 0.01M |

Die Scheiben wurden getrocknet und die Polymerreste bei 800 °C unter Luftzufuhr ausgebrannt. Danach sind die Scheiben je nach Kobaltgehalt weiß bis hellblau gefärbt.

Nach Sinterung auf eine Dichte von 96-97 % der theoretischen Dichte zeigten alle Scheiben eine blaue Farbe. Die erforderliche Sintertemperatur betrug für Proben a) und b) 1180 °C, für Probe c) 1190 °C, für Proben d) und e) 1220 °C.

Die heißisostatische Nachverdichtung wurde für Proben a), b) und c) bei 1150 °C und für Proben d) und e) bei 1200 °C durchgeführt.

Die heißisostatische Nachverdichtung bewirkte eine drastische Vertiefung der Färbung. Proben a) und b) sind tiefblau-schwarz gefärbt und nur schwach transluzent. Probe c) ist dunkelblau, d) mittelblau und e) hellblau gefärbt. Mit abnehmender Farbtiefe erhöht sich die Lichtdurchlässigkeit der Proben.

Nach Politur der Oberflächen wurden die Scheiben transparent, so dass man z.B. durch eine dunkelblaue Scheibe aus Material d) von 0.8 mm Dicke hindurchsehen kann, ähnlich wie durch ein Fenster und z.B. dahinter befindliche Schrift lesen kann. Für Material e) wurde an 0.82 mm dicken Scheiben bei 640 nm Wellenlänge eine In-Line-Transparenz von 45.8 % gemessen und für Material d) eine In-Line-Transparenz von 18.2 %.

Abb. 2 zeigt die Transmissionsspektren dieser beiden Proben im Vergleich zu einem undotierten nichtfarbigen Material mit einer Reinheit von 99.95 %, bei dem die Suspension allerdings durch Schwingmühlenmahlung deagglomeriert wurde. Der niedrige Messwert für die Transparenz bei einer Wellenlänge von 640nm, insbesondere bei Material d) ist durch die Absorption im roten Spektralbereich zu erklären. Ein weiteres Minimum im Transmissionsspektrum tritt im IR-Bereich auf.

In Probe a) wurde durch ICP-Analyse eine Kobalt-Konzentrationen von 0.84 % und in Probe e) von 0.01 % ermittelt.

Durch röntgendiffraktometrische Analyse von Probe a) wurde als Fremdphase CoAl₂O₄ nachgewiesen. Die quantitative Phasenanalyse nach Rietveld-Methode ergab einen Anteil von 0.95 Ma.-%.

Abbildung 5 zeigt eine rasterelektronenmikroskopische Aufnahme des Gefüges. Das Gefüge ist dichtgesintert. Es sind keine Poren zu erkennen. Anhand von 3 Aufnahmen wurde eine mittlere Gefügekomgröße von 0.67 Mikrometern ermittelt. Bei 20000facher Vergrößerung war in den rasterelektronenmikroskopischen Aufnahmen keine Zweitphase und auch keine Poren erkennbar.

Aus dem Rohmaterial d) und e) wurden farbige transparente Steine von 1-1.5 ct. im Scherenschliff hergestellt und damit eine blaue bzw. eine hellblaue Färbung realisiert. Die stärker dotierten Proben ergeben für Steine dieser Größe einen sehr dunklen blauen Farbton. Mit zunehmendem Kobaltgehalt nimmt daher die Transparenz ab.

Das Material wurde vom Edelsteinschleifer als problemlos schleif- und facettierbar eingeschätzt

### Beispiel 4

Die Herstellung der Proben erfolgte wie unter Beispiel 2 bzw. 3 beschrieben, jedoch wurde auf die Mahlung der Suspension verzichtet. Eine rote Farbe (Beispiel 4a) wurde durch Dotierung wie in Probe a) aus Beispiel 2 und Sinterung bei 1210 °C, sowie heißisostatischem Pressen bei 1200 °C für 15 h unter Argonatmosphäre realisiert. Aus diesem Material wurde ein Stein in den Abmessungen 12.5 x 9.8 mm achteckig facettiert im Treppenschliff hergestellt Das Material wurde vom Edelsteinschleifer als problemlos schleif- und facettierbar eingeschätzt. Der Stein zeigt unter UVA- und UVC-Licht Lumineszenz. Es wurde ein Brechungsindex von 1.765-1.770 gemessen. Das Transmissionsspektrum einer 0.8 mm dicken polierten Scheibe dieses Materials ist in Abbildung 3 enthalten. Bei 640nm Wellenlänge wurde für die rote Scheibe eine In-Line-Transparenz von 43.7 % gemessen.

Eine blaue Färbung (Beispiel 4b) wurde durch Dotierung wie in Probe a) aus Beispiel 3 und Sinterung bei 1170 °C, sowie heißisostatischem Pressen bei 1200 °C für 15 h unter Argonatmosphäre realisiert.

Das Transmissionsspektren einer 0.8 mm dicken polierten Scheibe dieses blaugefärbten Materials zeigt Abbildung 2. Bei der Messwellenlänge von 640 nm absorbiert diese blaue Scheibe das rote Licht des Messgerätes nahezu vollständig, während bei ca. 1000 nm Wellenlänge nahezu die gleiche Transmission wie beim ungefärbten Vergleichsmaterial erreicht wird.

Durch Mahlaufbereitung des Schlickers, optimierte Sinterbedingungen und besonders im Fall des Kobaltspinells durch geringere Dotierung, wie in Beispiel 3 beschrieben, ist es generell möglich die Transparenz des Materials weiter zu erhöhen als in den Beispielen dargestellt.

Abbildung 6 zeigt eine rasterelektronenmikroskopische Aufnahme des chromdotierten Gefüges in 10000 facher Vergrößerung. Das Gefüge ist dichtgesintert. Es sind keine Poren zu erkennen.

### Beispiel 5

Die Herstellung der Proben erfolgte wie in Beispiel 2 beschrieben. Zur Einbringung von Dotierungen, die geeignet sind eine grüne Färbung zu erzeugen, wurde jeweils eine der folgenden Lösungen verwendet:
a) Nickel(II)-nitrat Hexahydrat, (Fluka) 0.25M
b) Eisen(III)-nitrat Nonahydrat, (Fluka) 0.5 M
c) Ammoniumeisen(II)-sulfat Hexahydrat (Fluka) / Eisen(III)-nitrat Nonahydrat, (Fluka) 0.1M / 0.1M
   sowie zum Vergleich mit Beispiel 2c folgende Dotierung:
d) Ammoniumeisen(II)-sulfat Hexahydrat (Fluka) / Chrom(III)-nitrat Nonahydrat, 0.1M /0.1M.

Die Proben wurden bei 1200-1240 °C zu einer Dichte von 95-97 % der maximalen Dichte gesintert und bei 1200 °C für 15 Stunden unter Argonatmosphäre heißisostatisch gepresst.

Aus dem Material wurden transparente Steine von 1-1.5 ct. im Scherenschliff hergestellt, die folgende Färbungen aufweisen: a) flaschengrün, b) hellgrün, c) hell-olivgrün und d) rubinrot. Das Material wurde vom Edelsteinschleifer als problemlos schleif- und facettierbar eingeschätzt.

An Material b) wurde ein Stein in Baguetteform geschliffen, an dem ein Brechungsindex von 1.767-1.769 ermittelt wurde.

Für 0.8 mm dicke Scheiben wurde bei 640 nm Wellenlänge an Material a) eine In-Line-Transparenz von 19.6 % und an Material c) eine In-Line-Transparenz von 52.2 % und an Material d) eine In-Line-Transparenz von 50.2 % gemessen. Für Material c) wurde eine mittlere Teilchengröße von 0.74 Mikrometern ermittelt. Das Transmissionspektrum einer polierten 0.8 mm dicken Scheibe dieses Materials ist in Abbildung 4 enthalten.

Das Spektrum einer polierten 0.8 mm dicken Scheibe von Material d) ist in Abb.3 enthalten.

### Beispiel 6

Im Gegensatz zu den bisher beschriebenen Beispielen wurde je ein transparentes rotes, grünes und blaues Material hergestellt, jedoch ohne MgO-Dotierung.

Die Herstellung erfolgte ansonsten wie in Beispiel 2 beschrieben mit einer der folgenden Dotierungslösungen:
a) Nickei(II)nitrat Hexahydrat, 0.25 M
b) Kobalt(II)nitrat-Hexahydrat, 0.1 M
c) Chrom(III)nitrat-Nonahydrat, 0.5 M.

Material a) wurde bei 1220 °C, Material b) bei 1190 °C und Material c) bei 1270 °C gesintert.

Material b) danach bei 1160 °C und die beiden andern Materialien bei 1200 °C heißisostatisch für 15 h unter Argonatmosphäre gepresst. Die Färbung und Transparenz unterscheiden sich augenscheinlich nicht von den entsprechenden Färbungen der Beispiele ohne Magnesiumdotierung. Aus dem Material wurden transparente Steine von 1-1.5 ct. im Scherenschliff hergestellt. Das Material wurde vom Edelsteinschleifer als problemlos schleif- und facettierbar eingeschätzt.

Folgende mittlere Teilchengröße der Gefüge wurden ermittelt: a) 0.62 Mikrometer, b) 0.73 Mikrometer, c) 0.61 Mikrometer. Es waren keine Poren im Gefüge erkennbar. Das Transmissionspektrum von Material b) ist in Abb.2 und das Spektrum von Material a) in Abbildung 4 dargestellt.

Folgende Härten HV10 wurden bestimmt: für a) 2028±8, für b) 2001±20 und für c) 2075±23. HV10 bezeichnet eine Vickers-Härte, bei deren Messung der Indenter mit einer Masse von 10 kg belastet wurde.

### Beispiel 7

Durch Temperung an Luft, z.B. bei 1100 °C für 30 min mit einer Rampe von 10 K/min, wurde eine Farbverschiebung nach gelb erzielt. Diese Verschiebung ist um so deutlicher, je heller der Farbton ist.

Das rosafarbene Rohmaterial aus Beispiel 2e) nahm durch die Temperung eine leuchtend orange Färbung an. Das flaschengrüne Material aus Beispiel 6a) veränderte die Färbung durch die Temperung nach olivgrün.

Das hellolivgrüne Material aus Beispiel 5c) wurde nach Temperung leuchtend gelb. Die In-Line-Transparenz einer polierten 0.8 mm dicken Scheibe aus Beispiel 5c) nach Temperung beträgt 53.6%. Beim rubinroten Material aus Beispiel 2b) war nach Temperung visuell kein Farbunterschied erkennbar. Die In-Line-Transparenz einer polierten 0.8 mm dicken Scheibe aus Beispiel 2b) nach Temperung beträgt 45.4%. Die thermische Behandlung hatte keinen Einfluss auf die mittlere Korngröße des Gefüges.

Die Transmissionspektren der Proben aus Beispiel 5c) und 6a) nach der thermischen Behandlung zeigt Abbildung 4. Das Transmissionspektrum von Beispiel 2b) nach der thermischen Behandlung ist in Abbildung 3 enthalten.

### Beispiel 8

Die Herstellung der Proben erfolgte wie in Beispiel 2 beschrieben. Die Suspension wurde in 3 Glasschalen von ca. 5cm x 10cm etwa 2 cm hoch gegossen und polymerisiert.

Danach wurden die Gelkörper mit den in Beispiel 2b) bzw. 3d) beschriebenen Lösungen, sowie der auf 0.1 M verdünnten Lösung aus Beispiel 5a) für 8 Stunden unter ständiger Bewegung infiltriert.

Das Material wurde im Trockenschrank unter ständiger Verringerung der Luftfeuchtigkeit innerhalb ca. 1Woche getrocknet und danach bei 800 °C unter Luftzufuhr ausgebrannt.

Aus diesen Teilen wurden Ringe von 26 mm Außendurchmesser und ca. 22.5 mm Innendurchmesser herausgefräst. Nach Sinterung bei 1220 °C hatten die Ringe einen Außendurchmesser von 21.8 mm und einen Innendurchmesser von 18.8 mm.

Das undurchsichtige, schwach hellrosa (2b), hellblau (3d) bzw. hellgrün (5a) gefärbte Material wandelte sich nach heißisostatischem Pressen bei 1200 °C für 15 h unter Argon in durchsichtiges tiefes rot (2b), blau (3d), bzw. grün (5a) um.

Die mittlere Festigkeit der farbigen Materialien, bestimmt durch 4 Punkt Biegung, liegt bei 550-700 MPa, die Härte HV 10 bei 19-21 GPa und die Bruchzähigkeit K_{IC} bei 3.5-4.5 MPa√m. HV10 bezeichnet eine Vickers-Härte, bei deren Messung der Indenter mit einer Masse von 10 kg belastet wurde, K_{IC} wurde nach der SENB-Methode ermittelt, indem ein ca. 0.6mm tiefer und ca. 0.2 mm breiter Vorkerb durch Nachkerben mit Diamant besetzter Rasierklinge auf eine Endtiefe von ca. 1 mm gebracht wurde.

### Beispiel 9

Die Herstellung der Suspension erfolgte wie in Beispiel 2 beschrieben. Die Suspension wurde in eine Form aus 2 Acrylglasrohren von 7cm Außendurchmesser bzw. 8cm Innendurchmesser gegossen, so dass nach der Polymerisation ein flexibles Rohr mit einem Innendurchmesser von 7 cm, einer Wandstärke von 0.5 cm und einer Länge von etwa 10cm entformt werden konnte. Das Rohr wurde für 12 h in 0.1 M Chrom(III)nitrat-Nonahydrat Lösung infiltriert und danach getrocknet, bei 800 °C ausgebrannt und bei 1240 °C gesintert. Durch heißisostatisches Pressen bei 1200 °C unter Argonatmosphäre wandelte sich die rosa gefärbte Keramik in eine tiefrote transluzente Keramik um. Die Endmaße des Rohrs betragen ca. 6 cm Außen- und 5.3 cm Innendurchmesser.

## Patentansprüche

1. Farbiges durchsichtiges Korundmaterial aus polykristallinem sub-µm Gefüge einer mittleren Teilchengröße < 1µm **und einer Dichte > 99.9 % der theoretischen Dichte,** bei dem das Transmissionsspektrum sich vom Spektrum des nicht mit farbgebenden Dotierungen versehenen mindestens 99.95% reinen Sub-Mikrometer-Korundmaterial durch das Auftreten einer absorptionsbedingt verringerten Transmission in einem oder mehreren Teilen des sichtbaren Spektrums unterscheidet, so dass eine visuell erkennbare Färbung des Materials hervorgerufen wird.

2. Korundmaterial nach Anspruch 1, **dadurch gekennzeichnet, dass** polierte Scheiben aus dem Material bis zu einer Dicke von 0.8 mm transparent sind.

3. Korundmaterial nach Anspruch 2, **dadurch gekennzeichnet, dass** polierte Scheiben des Materials bis zu einer Dicke von 3 mm so transparent sind.

4. Korundmaterial nach Anspruch 1, **dadurch gekennzeichnet, dass** die Färbung durch farbgebende Dotierungen erzeugt wird, die im Korundgitter als feste Lösungen vorliegen.

5. Korundmaterial nach Anspruch 4, **dadurch gekennzeichnet, dass** als farbgebende Ionen die von natürlichen und synthetischen einkristallinen Rubinen und Saphiren bekannten Dotierungen in den von natürlichen und synthetischen einkristallinen Rubinen und Saphiren bekannten Konzentrationen von 0.01-3 Ma.-% verwendet sind.

6. Korundmaterial nach Anspruch 5, **dadurch gekennzeichnet, dass** als farbgebende Ionen Cr, Ni, Fe, Ti, V, Co eingesetzt sind.

7. Korundmaterial nach Anspruch 1, **dadurch gekennzeichnet, dass** die Färbung durch Einlagerung farbgebender anorganischer Verbindungen im Gefüge erfolgt.

8. Korundmaterial nach Anspruch 7, **dadurch gekennzeichnet, dass** die Färbung durch Al enthaltende Pigmente, wie Spinelle und Granate erfolgt.

9. Korundmaterial nach Anspruch 4 und 7, **dadurch gekennzeichnet, dass** die Farben rot, blau, grün und gelb und Farbmischungen aus diesen Farben in abgestuften Farbsättigungen durch farbgebende Dotierungen und färbende Einlagerungen realisiert sind.

10. Korundmaterial nach Anspruch 1, **dadurch gekennzeichnet, dass** die mittlere Teilchengröße der Korundkristallite 0.3 bis 0.8 Mikrometer beträgt.

11. Korundmaterial nach Anspruch 1, **dadurch gekennzeichnet, dass** der Brechungsindex 1.76 - 1.77 beträgt.

12. Korundmaterial nach Anspruch 1, **dadurch gekennzeichnet, dass** die Transmission des direkt ungestreut durchgehenden Lichtes an einer 0.8 mm dicken polierten Scheibe bei einer Wellenlänge aus dem sichtbaren Bereich des elektromagnetischen Spektrums > 45 % ist.

13. Korundmaterial nach Anspruch 1, **dadurch gekennzeichnet, dass** durch Dotierungsinhomogenitäten Farbübergänge und Farbinhomogenitäten im Material erzeugt sind.

14. Korundmaterial nach Anspruch 1, **dadurch gekennzeichnet, dass** seine Härte HV 10 bei mindestens 19 GPa liegt.

15. Verfahren zur Herstellung eines farbigen durchsichtigen Korundmaterials mit polykristallinem sub-µm Gefüge gemäß einem der Ansprüche 1 bis 14, bei dem eine gleichmäßige Färbung in einem Grünkörper erreicht wird, indem der Grünkörper vor der Trocknung und den anschließenden thermischen Behandlungen mit einer Flüssigkeit, die gelöste Metallionen oder Metallatome oder -ionen enthaltende Verbindungen enthält, infiltriert wird.

16. Verfahren nach Anspruch 15, **dadurch gekennzeichnet, dass** eine Flüssigkeit eingesetzt wird, die lösliche anorganische Salze oder metallorganische Verbindungen enthält.

17. Verfahren nach Anspruch 15, **dadurch gekennzeichnet, dass** eine Sinterung realisiert wird, bei der eine Sintertemperatur von 1400 °C nicht überschritten wird und/oder keine Wasserstoffatmosphäre beim Sintern verwendet wird und/oder auf Mg-Dotierung als Sinterhilfsmittel verzichtet wird.

18. Verfahren nach Anspruch 15, **dadurch gekennzeichnet, dass** eine thermische Behandlung realisiert wird, die aus einem optionalen Ausbrennvorgang, einer Vorsinterung, die dem Erreichen einer geschlossenen Porosität dient und einer heissisostatischen Nachverdichtung unter Druck besteht.

19. Verfahren nach Anspruch 15, **dadurch gekennzeichnet, dass** die Färbung durch einen weiteren Tempervorgang in sauerstoffhaltiger, reduzierender oder inerter Atmosphäre verändert wird.

20. Verfahren nach Anspruch 15, **dadurch gekennzeichnet, dass** die herzustellende Gestalt des Gegenstandes durch Verpressen von Korundpulver in eine Form, oder durch Gießen einer Korund enthaltenden Suspension in eine Form, oder durch Grünbearbeitung des ungesinterten Materials oder durch Hartbearbeitung des gesinterten Materials durchgeführt wird.

21. Verwendung des farbigen durchsichtigen Korundmaterials mit polykristallinem sub-µm Gefüge nach Anspruch 1 bis 14 und hergestellt nach Anspruch 15 bis 20 für transparente, transluzente und undurchsichtige farbige Formteile.

22. Verwendung nach Anspruch 21 als Substitutionsmaterial für Formteile, die ansonsten aus einkristallinem Material durch aufwendige Hartbearbeitung hergestellt werden müssen.

23. Verwendung nach Anspruch 21 als Imitation von einkristallinem Rubin und Saphir.

24. Verwendung nach Anspruch 21 als optische Fenster, Filter und Szintillatoren, für dekorative Formteile, dreidimensionale figürliche Abbildungen und Dentalkeramik, facettierbare Schmucksteine, hitzebeständige und verschleißfeste Bauteile und zur farblichen Kennzeichnung und Markierung.

## Claims

1. Coloured transparent α-alumina material comprising a polycrystalline sub-µm microstructure having an average particle size of < 1 µm and a density of > 99.9% of the theoretical density, whose transmission spectrum differs from the spectrum of the at least 99.95% pure submicron α-alumina material which has not been provided with coloured dopants in the occurrence of an absorption-related reduced transmission in one or more parts of the visible spectrum so as to produce a visually recognisable colouration of the material.

2. α-Alumina material according to Claim 1, **characterized in that** polished plates of the material are transparent up to a thickness of 0.8 mm.

3. α-Alumina material according to Claim 2, **characterized in that** polished plates of the material are transparent up to a thickness of 3 mm.

4. α-Alumina material according to Claim 1, **characterized in that** the colouration is produced by colour-imparting dopants which are present as solid solutions in the α-alumina lattice.

5. α-Alumina material according to Claim 4, **characterized in that** the dopants known from natural and synthetic single-crystal rubies and sapphires are used as colour-imparting ions in the concentrations of 0.01-3% by mass known from natural and synthetic single-crystal rubies and sapphires.

6. α-Alumina material according to Claim 5, **characterized in that** Cr, Ni, Fe, Ti, V, Co ions are used as colour-imparting ions.

7. α-Alumina material according to Claim 1, **characterized in that** the colouration is brought about by incorporation of colour-imparting inorganic compounds in the microstructure.

8. α-Alumina material according to Claim 7, **characterized in that** the colouration is brought about by Al-containing pigments such as spinels and garnets.

9. α-Alumina material according to Claim 4 or 7, **characterized in that** the colours red, blue, green and yellow and colour mixtures of these colours in gradated colour intensities are achieved by means of colour-imparting dopants and colour-imparting incoroporated materials.

10. α-Alumina material according to Claim 1, **characterized in that** the average size of the α-alumina crystallites is from 0.3 to 0.8 microns.

11. α-Alumina material according to Claim 1, **characterized in that** the index of refraction is 1.76-1.77.

12. α-Alumina material according to Claim 1, **characterized in that** the transmission of unscattered light passing directly through a 0.8 mm thick polished plate at a wavelength in the visible region of the electromagnetic spectrum is > 45%.

13. α-Alumina material according to Claim 1, **characterized in that** colour transitions and colour inhomogeneities in the material are produced by doping inhomogeneities.

14. α-Alumina material according to Claim 1, **characterized in that** its hardness HV 10 is at least 19 GPa.

15. Process for producing a coloured transparent α-alumina material having a polycrystalline sub-µm microstructure according to any of Claims 1 to 14, in which uniform colouration in a green body is achieved by infiltrating the green body before drying and the subsequent thermal treatments with a liquid containing dissolved metal ions or compounds containing metal atoms or ions.

16. Process according to Claim 15, **characterized in that** a liquid containing soluble inorganic salts or metal-organic compounds is used.

17. Process according to Claim 15, **characterized in that** sintering in which a sintering temperature of 1400°C is not exceeded and/or no hydrogen atmosphere is used during sintering and/or Mg dopants as sintering aids are not employed is carried out.

18. Process according to Claim 15, **characterized in that** thermal treatment which comprises an optional burn-out step, a presintering step which serves to achieve close porosity and a hot isostatic after-densification under pressure is carried out.

19. Process according to Claim 15, **characterized in that** the colouration is altered by means of a further heat treatment in an oxygen-containing, reducing or inert atmosphere.

20. Process according to Claim 15, **characterized in that** the desired shape of the article is achieved by pressing α-alumina powder in a mould or by casting α-alumina-containing suspension intro a mould or by green machining of the unsintered material or by hard machining of the sintered material.

21. Use of the coloured transparent α-alumina material having a polycrystalline sub-µm microstructure according to any of Claims 1 to 14 and produced according to any of Claims 15 to 20 for transparent, translucent and opaque coloured shaped bodies.

22. Use according to Claim 21 as substitute material for shaped parts which otherwise have to be produced from single-crystal material by costly hard machining.

23. Use according to Claim 21 as imitation of single-crystal ruby and sapphire.

24. Use according to Claim 21 as optical windows, filters and scintillators, for decorative shaped parts, three-dimensional figurative representations and dental ceramics, jewels which can be faceted, heat-resistant and wear-resistant components and for distinguishing and marking by means of colour.

## Revendications

1. Matériau de corindon transparent coloré présentant une structure polycristalline sous-micrométrique avec une taille moyenne des particules < 1 µm et une densité > 99,9 % de la densité théorique, dans lequel le spectre de transmission se distingue du spectre du matériau de corindon sous-micrométrique pur à au moins 99,95 % non pourvu de dopages colorants par l'apparition d'une transmission réduite pour cause d'absorption dans une ou plusieurs parties du spectre visible, de façon à provoquer une coloration visuellement reconnaissable du matériau.

2. Matériau de corindon selon la revendication 1, **caractérisé en ce que** des lames polies du matériau sont transparentes jusqu'à une épaisseur de 0,8 mm.

3. Matériau de corindon selon la revendication 2, **caractérisé en ce que** des lames polies du matériau sont transparentes jusqu'à une épaisseur de 3 mm.

4. Matériau de corindon selon la revendication 1, **caractérisé en ce que** la coloration est produite par des dopages colorants, qui sont présents sous forme de solution solide dans le réseau du corindon.

5. Matériau de corindon selon la revendication 4, **caractérisé en ce que** l'on utilise comme ions colorants les dopages connus de rubis et de saphirs naturels et synthétiques monocristallins avec les concentrations connues de rubis et de saphirs naturels et synthétiques monocristallins de 0,01 - 3 % Ma.

6. Matériau de corindon selon la revendication 5, **caractérisé en ce que** l'on utilise comme ions colorants Cr, Ni, Fe, Ti, V, Co.

7. Matériau de corindon selon la revendication 1, **caractérisé en ce que** la coloration est effectuée par incorporation de composés minéraux colorants dans la structure.

8. Matériau de corindon selon la revendication 7, **caractérisé en ce que** la coloration est effectuée au moyen de pigments contenant de l'aluminium, comme des spinelles et des grenats.

9. Matériau de corindon selon les revendications 4 et 7, **caractérisé en ce que** l'on a réalisé les couleurs rouge, bleu, vert et jaune et des mélanges de couleurs avec ces couleurs dans des saturations de couleur échelonnées par des dopages colorants et des insertions colorantes.

10. Matériau de corindon selon la revendication 1, **caractérisé en ce que** la taille moyenne des particules des cristaux de corindon vaut de 0,3 à 0,8 micromètre.

11. Matériau de corindon selon la revendication 1, **caractérisé en ce que** l'indice de réfraction vaut 1,76-1,77.

12. Matériau de corindon selon la revendication 1, **caractérisé en ce que** la transmission de la lumière traversante non dispersée directement sur une lame polie de 0,8 mm d'épaisseur pour une longueur d'onde du domaine visible du spectre électromagnétique est > 45 %.

13. Matériau de corindon selon la revendication 1, **caractérisé en ce que** des transitions de couleur et des hétérogénéités de couleur sont produites dans le matériau par des hétérogénéités de dopage.

14. Matériau de corindon selon la revendication 1, **caractérisé en ce que** sa dureté HV 10 vaut au moins 19 GPa.

15. Procédé pour la fabrication d'un matériau de corindon transparent coloré présentant une structure polycristalline sous-micrométrique selon l'une quelconque des revendications 1 à 14, dans lequel on produit une coloration uniforme dans un corps de base, en infiltrant le corps de base avec un liquide, qui contient des ions métalliques dissous ou des composés contenant des atomes métalliques ou des ions métalliques, avant le séchage et les traitements thermiques ultérieurs.

16. Procédé selon la revendication 15, **caractérisé en ce que** l'on utilise un liquide, qui contient des sels minéraux ou des composés organométalliques dissous.

17. Procédé selon la revendication 15, **caractérisé en ce que** l'on effectue un frittage, au cours duquel on ne dépasse pas une température de frittage de 1400 °C et/ou on n'utilise pas d'atmosphère d'hydrogène pendant le frittage et/ou on n'emploie pas de dopage Mg comme adjuvant de frittage.

18. Procédé selon la revendication 15, **caractérisé en ce que** l'on effectue un traitement thermique, qui consiste en une opération optionnelle de cuisson à bloc, un préfrittage, qui sert à obtenir une porosité fermée, et un compactage isostatique à chaud final sous pression.

19. Procédé selon la revendication 15, **caractérisé en ce que** l'on fait varier la coloration par une autre opération de maintien dans une atmosphère contenant de l'oxygène, réductrice ou inerte.

20. Procédé selon la revendication 15, **caractérisé en ce que** l'on réalise la forme à donner à l'objet par pressage de poudre de corindon dans un moule, ou par coulée d'une suspension contenant du corindon dans un moule, ou par usinage à vert du matériau non fritté ou par usinage sur dur du matériau fritté.

21. Utilisation du matériau de corindon transparent coloré présentant une structure polycristalline sous-micrométrique selon l'une quelconque des revendications 1 à 14 et fabriqué selon l'une quelconque des revendications 15 à 20 pour des pièces de forme colorées transparentes, translucides ou opaques.

22. Utilisation selon la revendication 21 comme matériau de substitution pour des pièces de forme qui, dans le cas contraire, doivent être fabriquées en matériau monocristallin par un coûteux usinage sur dur.

23. Utilisation selon la revendication 21, comme imitation de rubis ou de saphir monocristallin.

24. Utilisation selon la revendication 21 comme fenêtres, filtres ou scintillateurs optiques, pour des pièces de forme décoratives, des représentations figuratives tridimensionnelles et une céramique dentaire, des bijoux à tailler, des pièces résistant à la chaleur et à l'usure et pour l'identification et le marquage en couleurs.
